# EUROPEAN PATENT SPECIFICATION

(11) **EP 2 247 430 B1**
(45) Date of publication and mention of the grant of the patent: **26.03.2014**
(21) Application number: 09710347.7
(22) Date of filing: 11.02.2009
(51) Int. Cl.: B29C 51/42, B21D 26/02, B23K 26/08, B29C 51/10

(54) **METHOD FOR SHAPING A FILM-LIKE/SHEET-LIKE MATERIAL**
FORMGEBUNGSVERFAHREN FÜR FOLIEN- /BLATTFÖRMIGES MATERIAL
PROCÉDÉ POUR FAÇONNER UN MATÉRIAU DE TYPE FILM/DE TYPE FEUILLE

(30) Priority: 13.02.2008 FI 20080105
(43) Date of publication of application: 10.11.2010
(73) Proprietor: Innoplan OY, 03600 Karkkila (FI)
(72) Inventor: VALKAS, Timo, FI-03600 Karkkila (FI)
(74) Representative: Langenskiöld, Tord Karl Walter
(86) International application number: PCT/FI2009/050106
(87) International publication number: WO 2009/101254

(56) References cited:
- EP-A1- 0 703 019
- EP-A1- 0 970 798
- WO-A2-2005/007386
- WO-A2-2005/007386
- DE-A1- 10 106 183
- DE-A1- 10 106 183
- DE-A1- 10 349 156
- DE-A1- 10 349 156
- DE-A1-102006 006 662
- DE-U1- 9 316 382
- JP-A- 2002 154 161
- US-A- 5 359 872
- US-A- 5 359 872
- US-A1- 2002 062 161
- US-A1- 2002 062 161

## Description

The present invention relates to a method for shaping a film-like/sheet-like material. In particular, it relates to a method for changing the shape of a film or sheet, especially to create various three-dimensional shapes in a film or sheet.

Many different methods are used to shape plastic sheets. One example is the creation of Braille printing intended for the blind to read. Because plastic is a very common material in many applications, various articles made with the aid of heating and then shaping are made for very many different purposes.

In order to shape plastic, for example, into the shape of a cup, a mould can be used, into which plastic material, softened with the aid of heat, is pulled with the aid of a vacuum. A typical example of this kind of procedure is disclosed in the German application publication 10349156. As a source of heat, a laser source, for example, can be used, by means of which specific areas of a generally flat sheet-like material are heated, after which shaping takes place by suction against a mould. A similar method is disclosed in German application publication 10106183, in which specific areas are heated and subsequently formed using a mould.

A method is known from US patent application 2002/0062161, in which a wall deformation is created in a piece with a closed volume, or in a sheet, by heating the wall with a laser light and causing a pressure difference in the wall/film, which causes the wall to bulge outwards, in such a way that the most heated parts bulge more than the less heated parts. Thus, the shape is created by the differential stretching of parts heated to different degrees. Additionally, publications EP 0703019 A1 and JP 2002 154161 A disclose methods in which a sheet is posed on top of a chamber, parts of the sheet are heated and then deformed by pressurizing the chamber.

Publication WO 2005/007386 A2 discloses a method for shaping areas in a plate-like object by locally heating the area to be shaped while exerting differential pressure on the opposite sides of the object. This method is directed towards achieving local, smoothly shaped, deformations, extending over the shaped area. Moreover, different shapes are achieved by modifying the laser beam using optical elements, which restricts shapes obtainable with the method.

Publication US patent publication 5,359,872, in turn, discloses a method for sheet metal processing in which the area to be deformed is heated by a laser beam prior to the deformation. According to the method, shapes extending from the sheet can be formed by first heating an area corresponding to the shape and then drawing the area using a drawing jig. Other methods are shown in DE 10 200 600 666 2, EP0970798 and DE 931 6382 U1.

The present invention is intended to create a method, the use of which is in no way restricted, for example, to the use of a mould, or to mutual differences in areas heated to different degrees. According to the invention in accordance wich claim 1, the intention is to create three-dimensional patterns in a very versatile and simple manner.

In brief, the elastic state of especially thermoplastic materials is exploited according to the invention, in such a way that the outlines of a free-form image to be formed on a film/sheet are heated, for example, by rapidly moving or scanning a focussed bundle of thermal radiation, to a desired sufficiently uniform temperature and pressurizing one side of the film. The pressure seeks to press the film, which stretches from the just heated outlines of the image, so that the image is transferred from the surface of the film to a raised position. The unheated area remaining within the contours does not alter its shape in any way in response to the pressure, but retains its original shape.

The aforementioned and other advantages and benefits of the present invention are achieved in the manner described as characteristic in the accompanying claims.

One embodiment of the invention is described with reference to the accompanying patent drawings.

Thus:
Figure 1 shows the initial situation, stage 1 ;
Figure 2, for its part, shows the event of stage 2;
Figure 3 shows the intermediate product of stage 3; and
Figure 4 shows the final product.

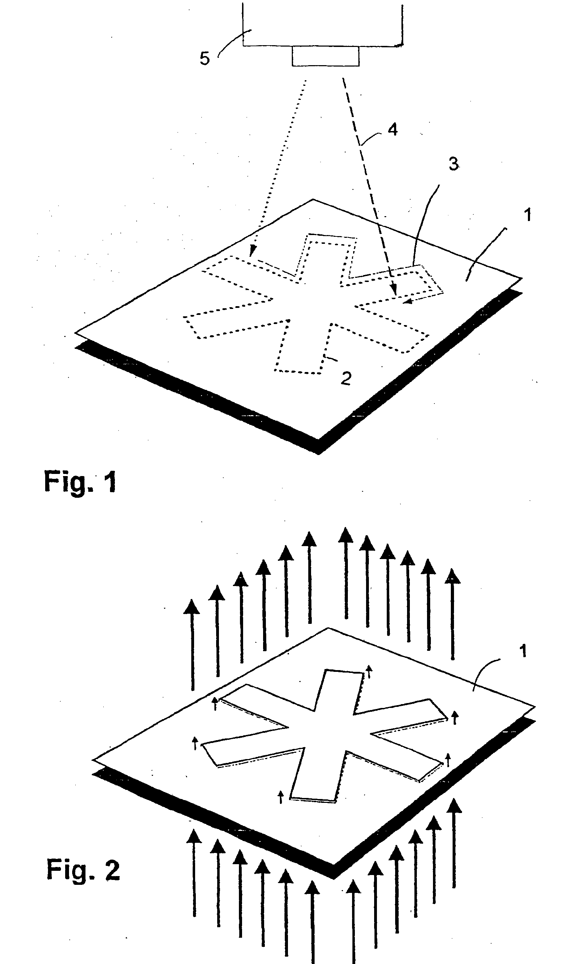

Thus, Figure 1 shows an essentially sheet-like initial product 1 , on which a shape to be made is drafted by dotted lines 2. The shape 2 is bordered by a line, following the edge line of the shape 2, marked by broken lines 3, along which the area is heated to a temperature that permits a pressure-pulse stage, which takes place next. The line in question is line 3, which depicts the outlines of the next stage. The source of the heating radiation 4 is marked with the reference number 5. The source can be, for example, a laser-light source.

No more detailed reference is made here to laser technology, which is one possible heat source, because this area of technology will be conventional technology to one skilled in the art.

In any event, the intention is to heat the outlines of the image in the material to such a temperature that, in the following stage, they will be sufficiently elastic for the shaping to be performed by vacuum and/or excess pressure, so that the heated parts of the material sheet or film heated along the desired outlines will stretch, and thus the unheated area remaining inside the heated lines will rise from the level of the material, in the direction of the lower pressure.

Figure 2 is intended to show the vacuum and/or excess pressure treatment described above. In this case, a lower pressure prevails above the sheet 1 than below it, so that image heated along the outlines rises upwards from the level of the rest of the sheet/film. The rise thus takes place essentially from a linear area.

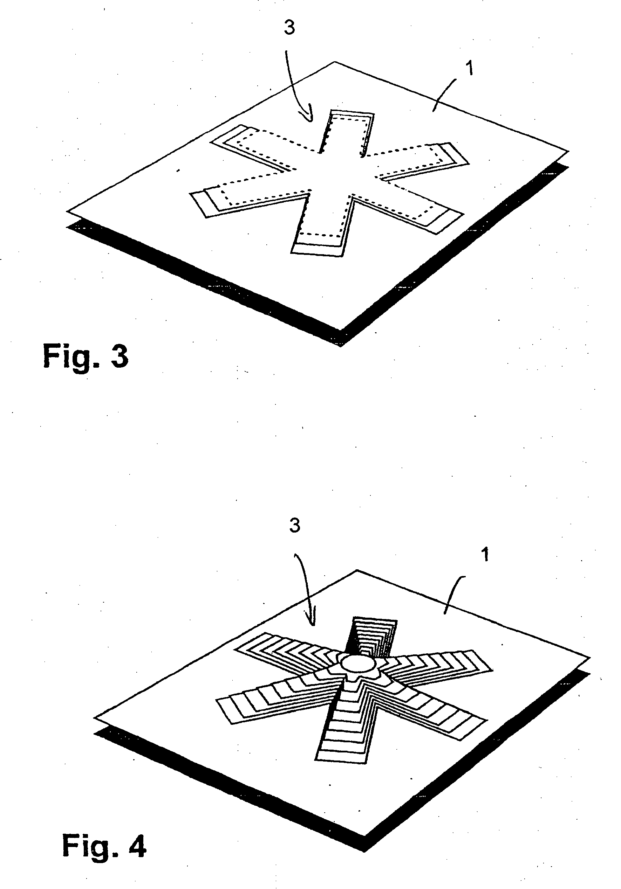

Figures 3 and 4 will be self-explanatory. By performing consecutive heating/stretching operations sufficiently many times, the shape 2 can be created. As can be easily concluded, the shape, as such, is of no significance in terms of the final result, any shape whatever can be manufactured according to the invention by performing heating along the outlines of the desired shape and performing vacuum and/or excess-pressure treatment.

In the above figures, the shape is shown as a very rough result, for reasons of clarity. In practice, the final shape is achieved by slicing the final 3D shape into very thin 2D slices, from which the shaping of one slice at a time in the desired direction is performed as consecutive operations. Even a relatively simple final shape contains a numerous group of stages.

Negative shapes can also be made in a shape according to the invention. This refers to the fact that the desired shape is created with the aid of heating and excess or vacuum pressurization, which excess or vacuum pressurization is performed in the opposite direction to the general direction of the overall shape. In this case, it is also possible, if necessary, to exploit the memory property of the material, when the re-heating of the outlines will return it to its former shape.

It is obvious, that, according to the invention, very many different types of material can be used. The material that most readily comes to mind is a plastic material. However, other materials that become plastic at a certain temperature are also suitable for use according to the invention. For example, nearly all metals soften to become malleable at a certain temperature specific to them. One interesting area is also composite-structure films/sheets. Thus, whether the use of a specific material will succeed or not depends only on variables such as the dimensioning of the heating power source, the duration of its operation, and similar.

It is also obvious that reference to a sheet or film includes a large variation in material thicknesses.

The temperature is controlled in some suitable manner. A large range of various types of alternative ways for this purpose can be found from different fields of technology, so there is no need to go into them in greater detail here. However, it can be mentioned that temperature can be measured and control performed with its aid, for example, with the aid of a heat camera based on infrared technology monitoring the laser beam. Temperature monitoring is, for its part, used in the general control of the process.

In this connection, it should be noted that, according to the aforementioned procedures, the heating can take place in such a way that a continuously heating radiation beam is moved along the outlines of the image to be formed, when the material will heat at the outlines.

Another way is one, in which the thermal radiation moves along a specific, usually backwards and forwards path, and heating occurs locally only at points located on the outlines of the image being formed. The movement of the thermal radiation can be achieved by moving a component creating thermal radiation, but more probably it will take place in such a way that the control of the thermal radiation takes place with the aid of mirrors, lenses, or corresponding optical elements.

As a third alternative, a solution can be presented, in which the heated area is created in such a way that a pattern shaped to correspond to the area to be heated by a thermal radiation beam is created in the heating head, which is, as such, aimed at the material to be heated, when a heated area, corresponding to the outlines of the shape, arises in a single operation. There are several ways of forming a thermal radiation beam of a desired shaped, of which certain optical methods are the most likely.

A manner of this kind can be envisaged as being very advantageous when a relatively simple product is being made in a large series.

A common feature in all of the ways referred to is that the warming/heating is performed only along the outline of the area to be raised from the plane.

According to the method according to the invention, the heating/pressurization cycles can be repeated for the desired number of new coordinates, which means that three-dimensional surfaces can be formed from a film/sheet in the same manner as in vacuum moulding, but in the present method the geometry of the piece is created directly by numerical control, without moulds.

It should also be noted, that shapes can also be formed, for example, as already stated, so that 'negative' shapes relative to the previous stage are made onto three dimensional shapes created by one way or another in a stage. This refers, for example, to a situation, in which the product is shaped originally, by means of vacuum forming, for example, with the aid of a mould. For vacuum forming to be possible, the product must not have protrusions extending in opposite directions, which would prevent it from being detached from the mould.

By means of the method according to the invention, the shaping of a vacuum-moulded piece can be advantageously continued by making protrusions from it in any direction whatever. As such, the method is suitable for very many different purposes.

If desired, in addition or solely temperature and/or distance measurement can be used as variables controlling algorithms. Return and reshaping according to the prior art can also be used in this method.

Experiments have shown that liquid too, as well as air pressure (gas) can be used for shaping, in which case the control of the shaping becomes specified as a mathematically calculable change in volume of each free-form change in shape.

In practice, an application can be based on a computer-based system, in which the desired three-dimensional model is loaded into the system, which slices the model into parts and which controls the heating and operating unit according to the model produced, the unit performing the shaping in stages of the film or sheet by heating specific outlines, performing the stretching of the material at the outlines with the aid of pressure, and thus manufacturing the final product.

Any known system whatever, with the aid of which a targeted heating effect can be created, can be used for heating. Such systems are particularly based on the use of laser or infrared-range light and on possible optical concentration or reflection of the light.

Because the return/returning of the film is not necessary in all cases, this extends the range of materials available for use.

## Claims

1. Method for shaping a material film or sheet, particularly for making three-dimensional shapes in it, in such a way that the film or sheet is warmed or heated and a pulse of excess pressure or vacuum is induced in a medium on one side of the film or sheet,
- wherein the warming or heating is performed along an outline of the three-dimensional shape to be formed, to a temperature which will permit a change in the shape of the film or sheet in the area of the heated outline and will create stretching along the heated outline, in order to cause the unheated part of the film or sheet inside the outline to deviate from the plane of the surface, and
- wherein the final three-dimensional shape that is the subject is divided into a group of two-dimensional slices, the outline of each one of which being the area to be warmed or heated,
**characterized in that** the three-dimensional shape is created in the film or sheet by repeating several times the heating and stretching stage directed to different locations.

2. Method according to claim 1, **characterized in that** the oulines are warmed/heated to the desired temperature uniformly and one side of the film is pressurized.

3. Method according to claim 1, **characterized in that** the heated outlines are formed in the film/sheet by directing a focussed, moving beam of thermal-radiation onto it.

4. Method according to any of the above claims, **characterized in that** the film/sheet is of plastic, particularly of thermoplastic.

5. Method according to any of the above claims, **characterized in that** the film/sheet has a ) composite structure.

6. Method according to any of the above claims, **characterized in that** the film/sheet is of metal or a metal alloy.

7. Method according to claim 1, **characterized in that** pulses of the pressurized medium are used to shape the film/sheet in different directions in different stages.

8. Method according to claim 1, **characterized in that** the warming/heating is performed by using a focused source of infrared or laser light.

9. Method according to any of the above claims, **characterized in that**, in the shaping, a computer-based system is used, into which the three-dimensional model to be formed is loaded.

## Patentansprüche

1. Verfahren zur Formgebung eines flächigen Materials (Folie oder Blatt), insbesondere um in ihm dreidimensionale Formen herzustellen, derart, dass die Folie oder das Blatt erwärmt oder erhitzt wird und in einem Medium, das an einer Seite der Folie oder des Blatts angeordnet ist, ein Über- oder Unterdruckpuls hervorgerufen wird,
wobei das Erwärmen oder Erhitzen entlang einer Kontur der zu bildenden dreidimensionalen Form durchgeführt wird bis zu einer Temperatur, die eine Formänderung der Folie oder des Blatts in dem Bereich der erhitzten Kontur erlaubt und eine Dehnung entlang der erhitzten Kontur erzeugt, um den innerhalb der Kontur liegenden nicht erhitzten Teil der Folie oder des Blatts aus der Ebene der Oberfläche hervortreten zu lassen, und
wobei die dreidimensionale Endgestalt, die der Gegenstand ist, in mehrere zweidimensionale Scheiben unterteilt ist, wobei die Kontur jeder Scheibe der zu erwärmende oder zu erhitzende Bereich ist,
**dadurch gekennzeichnet, dass** die dreidimensionale Form in der Folie oder dem Blatt dadurch erzeugt wird, dass der Erhitzungs- und Dehnungsschritt auf unterschiedliche Orte ausgerichtet mehrmals wiederholt wird.

2. Verfahren nach Anspruch 1, **dadurch gekennzeichnet, dass** die Konturen einheitlich bis zu der gewünschten Temperatur erwärmt/erhitzt werden und eine Seite der Folie oder des Blatts unter Druck gesetzt wird.

3. Verfahren nach Anspruch 1, **dadurch gekennzeichnet, dass** die erhitzten Konturen in der Folie oder dem Blatt gebildet werden, indem ein fokussiertes, sich bewegendes Bündel thermischer Strahlung darauf gerichtet wird.

4. Verfahren nach einem der vorstehenden Ansprüche, **dadurch gekennzeichnet, dass** die Folie oder das Blatt aus Kunststoff, insbesondere thermoplastischem Kunststoff, hergestellt ist.

5. Verfahren nach einem der vorstehenden Ansprüche, **dadurch gekennzeichnet, dass** die Folie oder das Blatt eine Verbundstruktur hat.

6. Verfahren nach einem der vorstehenden Ansprüche, **dadurch gekennzeichnet, dass** die Folie oder das Blatt aus einem Metall oder einer Metalllegierung hergestellt ist.

7. Verfahren nach Anspruch 1, **dadurch gekennzeichnet, dass** die Pulse des unter Druck stehenden Mediums verwendet werden, um die Folie oder das Blatt in verschiedenen Schritten in verschiedene Richtungen zu formen.

8. Verfahren nach Anspruch 1, **dadurch gekennzeichnet, dass** das Erwärmen/Erhitzen durch Verwendung einer fokussierten Infrarot- oder Laserlichtquelle durchgeführt wird.

9. Verfahren nach einem der vorstehenden Ansprüche, **dadurch gekennzeichnet, dass** bei der Formgebung ein computergestütztes System verwendet wird, in welches das zu formende dreidimensionale Modell eingegeben wird.

## Revendications

1. Procédé de façonnage d'un matériau en film ou feuille, plus particulièrement de manière à assurer la réalisation de formes tridimensionnelles à partir de celui-ci, d'une manière dans laquelle le film ou feuille est réchauffé ou chauffé et une impulsion en surpression ou dépression est induite dans un milieu, sur une première face du film ou feuille,
dans lequel le réchauffage ou chauffage est réalisé suivant un contour de la forme tridimensionnelle à former, à une température qui permet une modification sur la forme du film ou feuille dans la zone du contour chauffé et qui crée un étirage suivant le contour chauffé, dans le but de provoquer la déformation de la partie de film ou feuille non chauffée à l'intérieur du contour par rapport au plan de la surface, et
dans lequel la forme tridimensionnelle finale, c'est-à-dire le sujet, est divisée en un groupe de tranches bidimensionnelles, le contour de chacune d'elle formant la zone à réchauffer ou chauffer,
**caractérisé en ce que** la forme tridimensionnelle est créée sur le film ou feuille en répétant plusieurs fois l'étape de chauffage et d'étirage orientée vers différents emplacements.

2. Procédé selon la revendication 1, **caractérisé en ce que** les contours sont réchauffés/chauffés à la température désirée de manière uniforme et une face du film est pressurisée.

3. Procédé selon la revendication 1, **caractérisé en ce que** les contours chauffés sont formés sur le film/feuille en dirigeant sur celui-ci un faisceau de rayonnement thermique focalisé mobile.

4. Procédé selon l'une quelconque des revendications précédentes, **caractérisé en ce que** le film/feuille est en une matière plastique, plus particulièrement, en une matière thermoplastique.

5. Procédé selon l'une quelconque des revendications précédentes, **caractérisé en ce que** le film/feuille présente une structure composite.

6. Procédé selon l'une quelconque des revendications précédentes, **caractérisé en ce que** le film/feuille est en un métal ou un alliage métallique.

7. Procédé selon la revendication 1, **caractérisé en ce que** des impulsions du milieu pressurisé sont utilisées afin de façonner le film/feuille suivant différentes directions sur différents paliers.

8. Procédé selon la revendication 1, **caractérisé en ce que** le réchauffage/chauffage est mis en oeuvre en utilisant une source de lumière infrarouge ou laser focalisée.

9. Procédé selon selon l'une quelconque des revendications précédentes, **caractérisé en ce que**, lors du façonnage, un dispositif informatique est utilisé, dans lequel est chargé le modèle tridimensionnel à former.
